# EUROPÄISCHE PATENTSCHRIFT

(11) **EP 2 402 512 B1**
(45) Veröffentlichungstag und Bekanntmachung des Hinweises auf die Patenterteilung: **26.10.2016**
(21) Anmeldenummer: 11171011.7
(22) Anmeldetag: 22.06.2011
(51) Int. Cl.: E02F 3/627, B62D 49/02, A01B 59/048, A01D 87/00, E02F 3/96

(54) **FRONTLADER FÜR EINEN TRAKTOR**
FRONT LOADER FOR A TRACTOR
CHARGEUR FRONTAL POUR UN TRACTEUR

(30) Priorität: 29.06.2010 DE 102010030680
(43) Veröffentlichungstag der Anmeldung: 04.01.2012
(73) Patentinhaber: Deere & Company, Moline, IL 61265 (US)
(72) Erfinder: Faivre, Damien, 70100 Apremont (FR)
(74) Vertreter: Reichert, Christian

(56) Entgegenhaltungen:
- EP-A1- 1 389 656
- EP-A2- 0 965 696
- WO-A1-2008/070901
- DE-A1-102005 053 041
- JP-A- 2000 170 196

## Beschreibung

Die Erfindung betrifft einen Frontlader für einen Traktor, mit wenigstens einer Frontladerschwinge und einer an der Frontladerschwinge angebrachten Parkständereinrichtung zum Abstellen des Frontladers, wobei die Parkständereinrichtung eine schwenkbar an der Frontladerschwinge befestigte Parkstütze umfasst, die aus einer Betriebsstellung in eine Parkstellung verschwenkbar ist, wobei die Parkständereinrichtung ferner eine einenends verschwenkbar an der Frontladerschwinge befestigte Arretierungsstrebe umfasst, welche anderenends an der Parkstütze mittels einem an der Arretierungsstrebe ausgebildeten Führungsmittel und einer in der Parkstütze ausgebildeten Führungsnut verschiebbar geführt ist, wobei das Führungsmittel durch Verschwenken der Parkstütze in die Parkstellung in eine Arretierposition verbringbar ist, in der es an einem in der Führungsnut ausgebildeten Anschlag zur Anlage kommt, wobei der Anschlag derart in der Führungsnut ausgebildet ist, dass das Führungsmittel von einer in der Parkstellung auf die Arretierungsstrebe wirkenden Stützkraft der Frontladerschwinge gegen den Anschlag drängbar und in der Arretierposition fixierbar ist.

Der Einsatz von Frontladern zum Bewegen von Material mit einem Traktor ist bekannt. Dazu können Frontlader mittels einer am Traktor vorgesehenen Rahmenkonsole am Traktor angebaut bzw. angekoppelt werden. Der Frontlader verfügt üblicherweise über zwei parallel geführte Schwingen, die sich am Frontende des Traktors erstrecken und mit einem entsprechenden Ladewerkzeug, beispielsweise einer Schaufel, einem Greifer, einer Ladegabel etc. bestückt sind, wobei die Schwingen und das Frontladerwerkzeug üblicherweise durch hydraulische oder elektrische Aktuatoren betätigbar sind. An den Schwingen des Frontladers können Parkständereinrichtungen vorgesehen sein, die eine ausschwenkbare Parkstütze umfassen, welche in eine Parkstellung verbringbar und in dieser arretierbar ist. In der Parkstellung kann der Frontlader von dem Traktor abgekoppelt werden und sich auf den Parkstützen derart abstützen, dass die Schwingen beim Abstellen bzw. Parken des Frontladers in einer aufrechten An- bzw. Abkoppelstellung gehalten werden, so dass ein Ab- bzw. Ankoppeln des Frontladers durch Lösen (bzw. schließen) der Frontladerverriegelung und anschließendes (bzw. vorheriges) einfaches Rangieren des Traktors ermöglicht wird.

Die EP 1 389 656 A1 offenbart eine Einrichtung zur Abstützung einer Schwinge für ein Arbeitsgerät, z.B. eine Ladeschaufel. Die Einrichtung umfasst eine an der Schwinge verschwenkbar gelagerten Stützarm und einen gleichfalls an der Schwinge verschwenkbar gelagerten Rastarm, wobei der Stützarm und ein freies Ende des Rastarmes mit einander zugeordneten Rastelementen ausgebildet sind, durch welche der Stützarm mittels des Rastarmes in einer die Schwinge abstützenden Stellung verrastbar ist. Das freie Ende des Rastarmes ist dabei am Stützarm verschiebbar geführt.

Die EP 0 965 696 A2 offenbart eine Parkständereinrichtung für eine Frontladerschwinge.Die Einrichtung umfasst einen Stützfuß und ist zwischen einer Ruhestellung und einer Einsatzstellung verschwenkbar, wobei die Einrichtung in der Ruhestellung an der Frontladerschwinge gesichert ist, während sie in der Einsatzstellung über eine Stützstrebe festgelegt ist, die sich zwischen der Frontladerschwinge und dem Stützfuß erstreckt. Die Einrichtung sieht vor, dass der Stützfuß in der Ruhestellung und in der Einsatzstellung verriegelbar ausgebildet ist und die wirksame Länge der Stützstrebe unter Last einstellbar ist.

Eine ähnliche Partkständereinrichtung wird ferner auch in der WO 2008/070901 A1 offenbart. Die hier offenbarte Parkständereinrichtung umfasst eine Parkstütze, die schwenkbar an der Schwinge eines Frontladers angebracht und aus einer Betriebsstellung (in der der Frontlader an den Traktor angekoppelt ist) in eine Parkstellung (in der der Frontlader abkoppelbar und abstellbar bzw. parkbar ist) verschwenkbar ist. Eine zusätzliche Arretierungsstrebe erstreckt sich zwischen Schwinge und Parkstütze und ist einenends schwenkbar an der Schwinge und anderenends verschiebbar an der Parkstütze geführt. Die Arretierungsstrebe ist ferner mit einem Arretierungsriegel verbunden, der sich entlang der Parkstütze erstreckt und eine Verriegelung vornimmt, sobald die Parkstütze gegen einen Anschlag fährt und die Parkstellung erreicht. Eine automatische Entriegelung des Arretierungsriegels sowie ein anschließendes Verbringen der Parkständereinrichtung in die Betriebsstellung wird durch automatisches Betätigen des Arretierungsriegels und der Parkstütze durch eine am Frontlader ausgebildete Werkzeugaufnahme ermöglicht. Ein derartiger Automatismus kann neben einem hohen Bedienungskomfort jedoch auch Nachteile aufweisen. So erfordert eine derartige Parkständereinrichtung neben einer Konstruktion mit großer Teilevielfalt auch ein detailabgestimmtes Zusammenspiel zwischen Werkzeugaufnahme und Parkständereinrichtung bzw. Parkstütze, womit zum einen hohe Komplexität und Kosten verbunden sind und wodurch zum anderen die Parkständereinrichtung nur an Frontlader mit einer auf die Parkständereinrichtung abgestimmten Werkzeugaufnahmen zum Einsatz kommen kann.

Die der Erfindung zugrunde liegende Aufgabe wird darin gesehen, eine Parkständereinrichtung der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Frontlader der eingangs genannten Art derart ausgebildet, dass das Profilblech eine die Führungsnut bildende Profilkante aufweist, welche abschnittsweise eine richtungswechselnde Kontur aufweist an die sich der Anschlag anschließt, derart, dass das Führungsmittel einen Richtungswechsel erfährt, wenn die Parkstütze aus der Betriebsstellung in die Parkstellung verschwenkt wird und die auf die Arretierungsstrebe wirkende Stützkraft das Führungsmittel gegen den Anschlag drängt. Die spezielle Ausbildung des Anschlags in der Führungsnut ermöglicht gegenüber dem Bekannten eine Teilereduzierung dahingehend, dass kein zusätzlicher Arretierungsriegel vorgesehen ist, sondern eine Arretierung durch das Zusammenspiel von Führungsmittel und Form bzw. Ausbildung des Anschlags erfolgt. Die gesamte Parkständereinrichtung kann damit einfacher und kostengünstiger gestaltet werden. Ferner kann eine erfindungsgemäße Parkständereinrichtung unabhängig von der Ausgestaltung und Form einer Werkzeugaufnahme an einer Vielzahl von Frontladern Verwendung finden. Das Profilblech weist eine die Führungsnut bildende Profilkante auf, welche abschnittsweise eine richtungswechselnde, spiralenförmige oder hakenförmige Kontur aufweist an dessen Ende sich der Anschlag anschließt, derart, dass das Führungsmittel einen Richtungswechsel erfährt, wenn die Parkstütze aus der Betriebsstellung in die Parkstellung verschwenkt wird und die auf die Arretierungsstrebe wirkende Stützkraft das Führungsmittel gegen den Anschlag drängt. Das an der Arretierungsstrebe ausgebildete Führungsmittel wird beim Verschwenken der Parkstütze in die Parkstellung, durch eine aufgrund der durch Eigengewicht oder durch Betätigung vollzogene Abwärtsschwenkbewegung der Parkstütze, entlang der Profilkante geführt und in Richtung des Anschlags bewegt, sobald die auf die Arretierungsstrebe wirkende Stützkraft einsetzt. Die Arretierungsstrebe wird dabei entsprechend der Bewegung des Führungsmittels durch ihr Eigengewicht und durch die Abwärtsschwenkbewegung der Parkstütze ebenfalls abwärts geschwenkt. Das Führungsmittel wird dabei gegen die Profilkante gedrückt bzw. gedrängt und bewegt sich auf dieser wie ein Schlitten. Die am Ende der Führungsnut ausgebildete richtungswechselnde Kontur der Profilkante unterstützt bzw. führt das Führungsmittel automatisch gegen den Anschlag. Der Anschlag ist derart geformt, dass dieser eine Einfassung oder Einbettung des Führungsmittels ausbildet, so dass das Führungsmittel bei Erreichen der Arretierposition teilweise von der Form oder Kontur des Anschlags umgeben ist und eine weitere Verschiebung durch die auf die Arretierungsstrebe und das Führungsmittel wirkende Stützkraft verhindert wird. Das Profilblech kann je nach Ausbildung nur einseitig des U-Profils oder auch beidseitig des U-Profils an der bzw. den Seitenwänden befestigt sein, so dass durch eine beidseitige Ausführung eine beidseitige Führung des Führungsmittels und damit eine robustere und stabilere Führung des Führungsmittels erzielbar ist.

Die Parkstütze ist als U-Profil ausgebildet ist, wobei die wenigstens eine Führungsnut durch wenigstens ein an einer Seitenwand des U-Profils befestigtes Profilblech ausgebildet ist. Die Parkstütze kann jedoch auch gleichwertig eine andere Profilform, beispielsweise ein L-Profil aufweisen, derart, dass das die Führungsnut bildende Profilblech an einer der Schenkelseiten des L-Profils befestigt ist. Es ist ferner auch denkbar die Parkstütze als I-Profil auszubilden.

An der Parkstütze ist ein federvorgespannter Riegel ausgebildet ist, welcher zur Verriegelung der Parkständereinrichtung in der Betriebsstellung mit einer an der Frontladerschwinge ausgebildeten Rasteneinrichtung in Eingriff bringbar ist. Dazu kann an der Frontladerschwinge eine einfache Lasche oder ein Vorsprung angeordnet sein, an der bzw. dem der Riegel einrasten kann bzw. sich der Riegel durch seine Federvorspannung halten kann, sobald die Parkstütze in die Betriebsstellung verschwenkt wurde.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht eines Frontladers mit erfindungsgemäßer Parkständereinrichtung,
- Fig. 2: eine Parkständereinrichtung gemäß Figur 1 in einer perspektivischen Seitenansicht in einer Parkstellung und
- Fig. 3: eine schematische Seitenansicht eines Profilblechs aus Figur 2 mit Führungsnut und Führungsmittel.

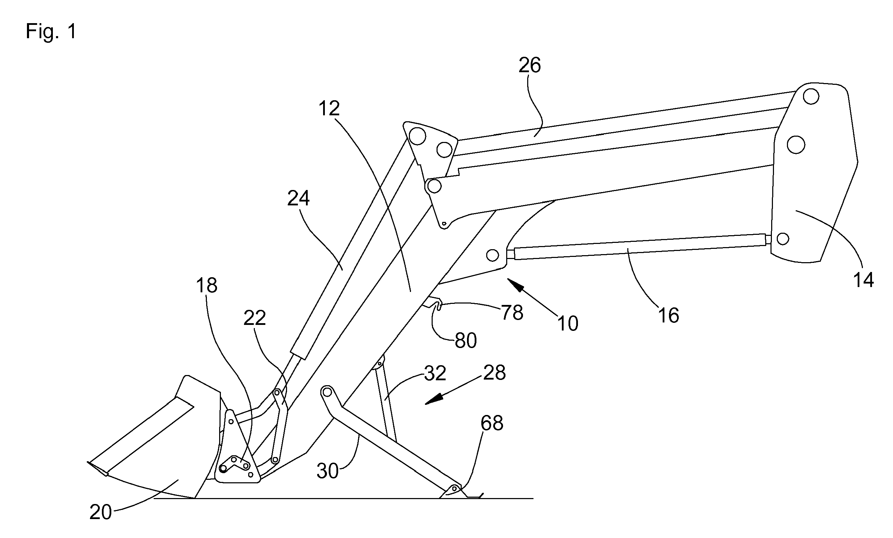

In Figur 1 ist ein Frontlader 10 dargestellt, der für Ladearbeiten an landwirtschaftlichen Fahrzeugen, beispielsweise Ackerschlepper, koppelbar und betätigbar ist.

Der Frontlader 10 weist eine Frontladerschwinge 12 auf, welche über ein Mastanordnung 14 und eine am Fahrzeug befestigte Konsole (nicht gezeigt) an das Fahrzeug koppelbar ist. Zwischen Mastanordnung 14 und Frontladerschwinge 12 erstreckt sich ein Aktuator 16, beispielsweise ein Hydraulikzylinder, zum Heben und Senken der Frontladerschwinge 12. Am freien Ende der Frontladerschwinge 12 ist eine Werkzeugaufnahme 18 angeordnet, welche mit einem auswechselbaren Frontladerwerkzeug 20, hier in Form einer Frontladerschaufel, bestückt ist. Über ein Betätigungsgestänge 22, welches über einen weiteren Aktuator 24 ansteuerbar ist, kann die Werkzeugaufnahme 18 und damit auch das Frontladerwerkzeug 20 gegenüber der Frontladerschwinge 12 verschwenkt werden. Ein weiteres Gestänge 26 dient zur Parallelführung der Werkzeugaufnahme 18 bzw. des Frontladerwerkzeugs 20 beim Heben und Senken der Frontladerschwinge 12.

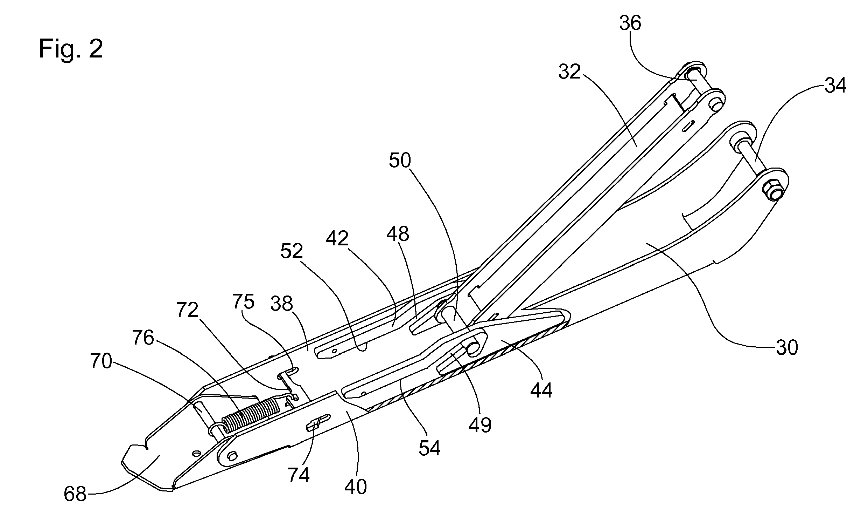

Der Frontlader weist ferner eine an der Frontladerschwinge 12 angeordnete Parkständereinrichtung 28 auf, wie sie im Detail in Figur 2 dargestellt ist.

Die Parkständereinrichtung 28 umfasst eine schwenkbar an der Frontladerschwinge 12 angelenkte Parkstütze 30 und eine einenends ebenfalls schwenkbar an der Frontladerschwinge 12 angelenkte Arretierungsstrebe 32, welche anderenends zusätzlich mit der Parkstütze 30 verschiebbar verbunden ist. Die Arretierungsstrebe 32 ist an der Parkstütze 30 in eine Arretierposition (wie in Figur 2 dargestellt) verbringbar, welche sie einnimmt, sobald die Parkstütze 30 in eine Parkstellung verschwenkt wird, wie im Folgenden genauer beschrieben wird. In der Parkstellung bzw. Arretierposition ist die Parkstütze 30 gegenüber der Frontladerschwinge 12 in einer durch die Länge und dem Schwenkwinkel der Arretierungsstrebe 32 vorgegebenen Stellung abgestützt und arretiert.

Die Parkstütze 30 ist an einem Ende mit einem Schwenkbolzen 34 an einem unteren Bereich des freien Endes der Frontladerschwinge 12 an dieser befestigt. Die Arretierungsstrebe 32 ist oberhalb der Befestigung der Parkstütze 30 an einem Ende ebenfalls mit einem Schwenkbolzen 36 an der Frontladerschwinge 12 befestigt bzw. angelenkt.

Die Parkstütze 30 ist al U-Profil ausgebildet und weist zwei sich in Richtung der Frontladerschwinge 12 erstreckende Seitenwände 38, 40 auf. An den Seitenwänden 38, 40 sind innenseitig der Parkstütze 30 gegenüberliegend jeweils ein Profilblech 42, 44 angeordnet, vorzugsweise angeschweißt.

Jedes Profilblech 42, 44 ist mit einer Aussparung 46 versehen, durch welche eine Führungsnut 48, 49 bzw. Führungsbahn geschaffen wird, welche gemäß einer am Profilblech 42, 44 ausgebildeten Profilkante 52, 54 begrenzt wird, entlang welcher ein Führungsmittel 50 verschiebbar geführt wird.

Das Führungsmittel 50 ist als Bolzen ausgebildet und am anderen Ende der Arretierungsstrebe 32 befestigt, derart dass die Enden des Bolzens in die jeweiligen Führungsnuten 48, 49 der Profilbleche 42, 44 eingreifen. Damit wird die Arretierungsstrebe 32 einerseits (an dem einen Ende) verschiebbar an der Frontladerschwinge 12 und andererseits (an dem anderen Ende) mit dem als Bolzen ausgebildeten Führungsmittel 50, entlang der Profilkanten 52, 54 verschiebbar, an der Parkstütze 30 angelenkt.

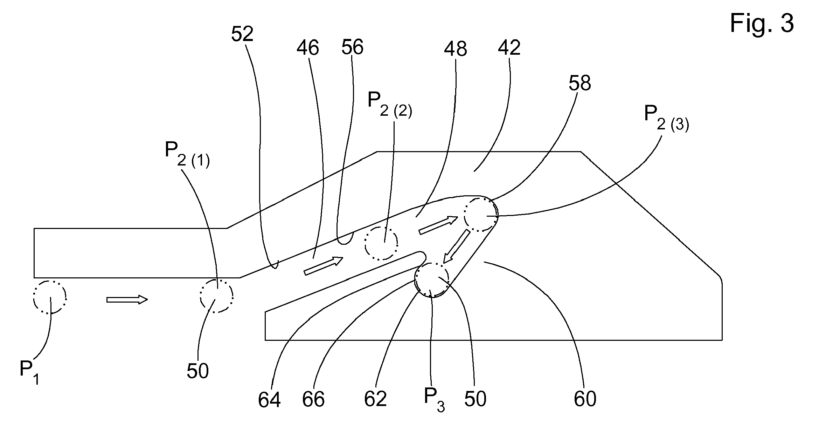

Die Ausbildung der jeweiligen Führungsnuten 48, 49 ist in Figur 3 detailliert dargestellt (beispielhaft an dem Profilblech 42). Die das Führungsmittel 50 (Bolzen) führenden Profilkanten 52, 54 weisen jeweils abschnittsweise eine richtungswechselnde Kontur auf, d.h. sie weisen einen in Richtung des einen Endes der Parkstütze 30 ansteigenden Verlauf 56 auf, der in einem ersten Wendepunkt 58 mündet, dem sich wiederum ein, entgegen dem ansteigenden Verlauf 56, in umgekehrter Richtung verlaufender abfallender Verlauf 60 anschließt. Der abfallende Verlauf 60 der jeweiligen Profilkante 52, 54 wiederum mündet in einem zweiten Wendepunkt 62, dem sich ein weiterer ansteigender Verlauf 64 anschließt, wobei der zweite Wendepunkt 62 und der darauf folgende weitere ansteigende Verlauf 64 einen Anschlag 66 bilden, der das Ende der jeweiligen Führungsnuten 48, 49 bildet. Der Anschlag 66 ist dabei halbkreisförmig ausgeformt, so dass er teilweise das jeweilige Ende des Führungsmittels 50 umschließt, sobald dieses gegen den Anschlag 66 verschoben wird. Für die Parkständereinrichtung 28 wird eine Betriebsstellung P1, mehrere Zwischenstellungen P2 und eine Parkstellung P3 definiert. In der Betriebsstellung P1 sind sowohl die Parkstütze 30 als auch die Arretierungsstrebe 32 bis zur Anlage an die Frontladerschwinge 12 eingeschwenkt bzw. eingeklappt oder hochgeklappt. Die Parkständereinrichtung 28 wird vorzugsweise in die Betriebsstellung verbracht, wenn der Frontlader 10 in Betrieb genommen werden soll, also an ein Fahrzeug angekoppelt ist. In der Parkstellung P3 (wie in Figur 1 und 2 dargestellt) sind sowohl die Parkstütze 30 als auch die Arretierungsstrebe 32 ausgeschwenkt bzw. ausgeklappt. Die Parkständereinrichtung 28 wird vorzugsweise in die Parkstellung P3 verbracht, wenn der Frontlader 10 außer Betrieb genommen werden soll, also von einem Fahrzeug abgekoppelt und abgestellt bzw. geparkt werden soll. Alle Stellungen, die die Parkständereinrichtung 28 zwischen der Betriebsstellung P1 und Parkstellung P3 einnimmt stellen eine der Zwischenstellungen P2 dar.

In Figur 3 sind für die Betriebsstellung P1, die Parkstellung P3 und drei verschiedenen Zwischenstellungen P2(1), P2(2), P2(3) die Positionen des in den Führungsnuten 48, 49 verschiebbar geführten Führungsmittels 50 dargestellt.

Ausgehend von der Betriebsstellung P1 liegt das Führungsmittel 50 in einem Anfangsabschnitt der Führungsnut 48, 49 an der Profilkante 52 an. Wird die Parkständereinrichtung 28 nun ausgeklappt bzw. soll in die Parkstellung P3 verbracht bzw. ausgeschwenkt werden, durchfährt das Führungsmittel 50 verschiedene Stellungen entlang der Profilkante 52 und nimmt in Folge die Stellungen P2(1), P2(2) und P2(3) ein. Dabei wird das Führungsmittel 50 durch die Schwenkbewegung der Parkstütze 30 automatisch entlang der Profilkante 52 geführt und durch den ansteigenden Verlauf 56, bis hin zum Wendepunkt 58, an dem das Führungsmittel 50 die Zwischenstellung P2(3) einnimmt, verschoben bzw. bewegt. Die Schwenkbewegung der Parkstütze 30 kann dabei durch eine Bedienperson ausgeführt oder auch schwerkraftbedingt durch das Eigengewicht der Parkstütze erfolgen. In der Zwischenposition P2(3) erreicht das Führungsmittel 50 den Wendepunkt 58. Dort nimmt die Parkständereinrichtung 28 einen maximalen Schwenkwinkel zur Frontladerschwinge 12 ein. Die Schwerkraft der Parkstütze 30 drängt das Führungsmittel 50 gegen den Wendepunkt 58, durch dessen Ausgestaltung ein weiteres Verschwenken der Parkstütze 30 blockiert wird. Im Zusammenspiel mit der Arretierungsstrebe 32, die über das Führungsmittel 50 mit der Parkstütze 30 verbunden ist, wird der maximale Schwenkwinkel begrenzt. In dieser Zwischenstellung P2(3) kann der Frontlader 10 nun von dem Fahrzeug abgekoppelt werden. Sobald die Mastanordnung 14 bzw. die Frontladerschwinge 12 vom Fahrzeug bzw. der Konsole getrennt wurden, beginnt der Frontlader 10 schwerkraftbedingt über die Parkstütze 30 zu kippen und leitet eine Stützkraft ein, die über die Arretierungsstrebe 32 an das Führungsmittel 52 übertragen wird. Die Stützkraft verschiebt das Führungsmittel 52 in der Führungsnut 48, 49 entlang des abfallenden Verlaufs 60 der Profilkanten 52, 54 bis hin zum zweiten Wendepunkt 62 und drängt das Führungsmittel gegen den Anschlag 66. Solange eine Stützkraft auf die Arretierungsstrebe 32 wirkt, ist das Führungsmittel 50 in dem Anschlag 66 festgelegt bzw. gefangenen und die Parkständereinrichtung 28 arretiert. Das Führungsmittel 50 wird dabei von dem Anschlag 66 blockiert bzw. gehalten, so dass gesamte Stützmoment des Frontladers 10 von der Parkständereinrichtung 28 aufgefangen bzw. der Frontlader 10 von der Parkständereinrichtung 28 abgestützt und abgestellt werden kann. Ein Lösen der Parkständereinrichtung 28 aus der Parkstellung P3 heraus erfolgt durch Ankoppeln und Anheben des Frontladers 10, so dass die Stützkraft aufgehoben wird und die Arretierungsstrebe 32 manuell entriegelt werden kann, indem das Führungsmittel 50 durch leichtes Anheben der Arretierungsstrebe 32 durch die Führungsnut 48, 49 in entgegen gesetzter Richtung bewegt bzw. verschoben wird. Die Parkständereinrichtung 28 kann dann wieder in die Betriebsstellung P1 verschwenkt werden.

Am freien Ende der Parkstütze 30 ist ein Pendelfuß 68 vorgesehen, der mittels eines Bolzens 70 pendelnd verschwenkbar an der Parkstütze 30 angebracht ist und eine Aufstands- bzw. Stützfläche bereitstellt, wenn die Parkständereinrichtung 28 in Parkstellung P3 verschwenkt wird.

Ferner erstreckt sich zwischen Pendelfuß 68 und Arretierungsstrebe 32 eine Riegeleinrichtung 72. Die Riegeleinrichtung 72 umfasst einen von den Seitenwänden 38, 40 aufgenommenen Riegel 74, der sich zwecks Betätigung durch die Seitenwand 38 greifbar erstreckt und durch eine Feder 76, die sich zwischen dem Riegel 74 und dem Bolzen 70 erstreckt, in Richtung des freien Endes der Parkstütze 30 vorgespannt ist. Der Riegel 74 ist durch ein in der Seitenwand 38 ausgebildetes Langloch 75 mit einem Bewegungsspiel versehen. Ferner ist eine Rasteneinrichtung 78 vorgesehen, die in Form eines mit einer Einrastkerbe 80 versehenen Bleches an der Frontladerschwinge 12 befestigt ist, derart, dass der Riegel 74 in der Betriebsstellung bedingt durch seine Federvorspannung in die Einrastkerbe 80 einrastet und die Parkständereinrichtung 28 in der Betriebsstellung hält, bzw. diese in der Betriebsstellung verriegelt. Durch einfaches Betätigen des Riegels 74 innerhalb des Langlochs 75 entgegen seiner Federvorspannung (Bewegen in Längsrichtung zur Parkstütze) kann die Parkständereinrichtung 28 entriegelt und in die Parkstellung verbracht werden.

## Patentansprüche

1. Frontlader (10) für einen Traktor, mit wenigstens einer Frontladerschwinge (12) und einer an der Frontladerschwinge (12) angebrachten Parkständereinrichtung (28) zum Abstellen des Frontladers (10), wobei die Parkständereinrichtung (28) eine schwenkbar an der Frontladerschwinge (12) befestigte Parkstütze (30) umfasst, die aus einer Betriebsstellung (P1) in eine Parkstellung (P3) verschwenkbar ist, wobei die Parkständereinrichtung (28) ferner eine einenends verschwenkbar an der Frontladerschwinge (12) befestigte Arretierungsstrebe (32) umfasst, welche anderenends an der Parkstütze (30) mittels einem an der Arretierungsstrebe (32) ausgebildeten Führungsmittel (50) und wenigstens einer in der Parkstütze (30) ausgebildeten Führungsnut (48, 49) verschiebbar geführt ist, wobei das Führungsmittel (50) durch Verschwenken der Parkstütze (30) in die Parkstellung (P3) in eine Arretierposition verbringbar ist, in der es an einem in der Führungsnut (48, 49) ausgebildeten Anschlag (66) zur Anlage kommt, wobei der Anschlag (66) derart in der Führungsnut (48, 49) ausgebildet ist, dass das Führungsmittel (50) von einer in der Parkstellung (P3) auf die Arretierungsstrebe (32) wirkenden Stützkraft der Frontladerschwinge (12) gegen den Anschlag (66) drängbar und in der Arretierposition fixierbar ist, **dadurch gekennzeichnet, dass** das Profilblech (42) eine die Führungsnut (48, 49) bildende Profilkante (52) aufweist, welche abschnittsweise eine richtungswechselnde Kontur aufweist an die sich der Anschlag (66) anschließt, derart, dass das Führungsmittel (50) einen Richtungswechsel erfährt, wenn die Parkstütze (30) aus der Betriebsstellung (P1) in die Parkstellung (P3) verschwenkt wird und die auf die Arretierungsstrebe (32) wirkende Stützkraft das Führungsmittel (50) gegen den Anschlag (66) drängt.

2. Frontlader (10) nach Anspruch 1, **dadurch gekennzeichnet, dass** die Parkstütze (30) als U-Profil ausgebildet ist, wobei die wenigstens eine Führungsnut (48, 49) durch wenigstens ein an einer Seitenwand (38, 40) des U-Profils befestigtes Profilblech (42) ausgebildet ist.

3. Frontlader (10) nach einem der vorhergehenden Ansprüche, **dadurch gekennzeichnet, dass** an der Parkstütze (30) ein federvorgespannter Riegel (74) ausgebildet ist, welcher zur Verriegelung der Parkständereinrichtung (28) in der Betriebsstellung (P1) mit einer an der Frontladerschwinge (12) ausgebildeten Rasteneinrichtung (78) in Eingriff bringbar ist.

## Claims

1. Front loader (10) for a tractor, with at least one front loader arm (12) and a parking stand device (28), which is attached to the front loader arm (12), for the parking of the front loader (10), wherein the parking stand device (28) comprises a parking support (30) which is fastened pivotably to the front loader arm (12) and is pivotable from an operating position (P1) into a parking position (P3), wherein the parking stand device (28) furthermore comprises a locking strut (32) which at one end is fastened pivotably to the front loader arm (12) and at the other end is guided displaceably on the parking support (30) by means of a guide means (50) formed on the locking strut (32) and at least one guide groove (48, 49) formed in the parking support (30), wherein, by pivoting of the parking support (30) into the parking position (P3), the guide means (50) can be brought into a locking position in which said guide means comes to lie against a stop (66) formed in the guide groove (48, 49), wherein the stop (66) is formed in the guide groove (48, 49) in such a manner that the guide means (50) can be forced against the stop (66) by a supporting force of the front loader arm (12), which supporting force acts on the locking strut (32) in the parking position (P3), and can be secured in the locking position, **characterized in that** the profiled plate (42) has a profiled edge (52) which forms the guide groove (48, 49) and in sections has a direction-changing contour adjoined by the stop (66) in such a manner that the guide means (50) undergoes a change in direction if the parking support (30) is pivoted from the operating position (P1) into the parking position (P3) and the supporting force acting on the locking strut (32) forces the guide means (50) against the stop (66).

2. Front loader (10) according to Claim 1, **characterized in that** the parking support (30) is designed as a U profile, wherein the at least one guide groove (48, 49) is formed by at least one profiled plate (42) fastened to a side wall (38, 40) of the U profile.

3. Front loader (10) according to either of the preceding claims, **characterized in that** a spring-prestressed bolt (74) is formed on the parking support (30), which bolt can be brought into engagement with a latch device (78), which is formed on the front loader arm (12), in order to lock the parking stand device (28) in the operating position (P1).

## Revendications

1. Chargeur frontal (10) pour un tracteur, comprenant au moins un balancier de chargeur frontal (12) et un dispositif de support de stationnement (28) monté sur le balancier de chargeur frontal (12) pour poser le chargeur frontal (10), le dispositif de support de stationnement (28) comprenant un montant de stationnement (30) fixé de manière pivotante au balancier de chargeur frontal (12), qui peut pivoter d'une position fonctionnelle (P1) dans une position de stationnement (P3), le dispositif de support de stationnement (28) comprenant en outre une entretoise de blocage (32) fixée à une extrémité de manière pivotante sur le balancier de chargeur frontal (12), laquelle est guidée à l'autre extrémité au niveau du montant de stationnement (30) au moyen d'un moyen de guidage (50) réalisé au niveau de l'entretoise de blocage (32) et d'au moins une rainure de guidage (48, 49) réalisée dans le montant de stationnement (30), le moyen de guidage (50) pouvant être amené, par pivotement du montant de stationnement (30) dans la position de stationnement (P3), dans une position de blocage dans laquelle il vient en appui contre une butée (66) réalisée dans la rainure de guidage (48, 49), la butée (66) étant réalisée dans la rainure de guidage (48, 49) de telle sorte que le moyen de guidage (50) puisse être poussé contre la butée (66) par une force de support du balancier de chargeur frontal (12) agissant sur l'entretoise de blocage (32) dans la position de stationnement (P3) et puisse être fixé dans la position de blocage, **caractérisé en ce que** la tôle profilée (42) présente une arête profilée (52) formant la rainure de guidage (48, 49) qui présente en partie un contour avec changement de direction auquel se raccorde la butée (66) de telle sorte que le moyen de guidage (50) subisse un changement de direction lorsque le montant de stationnement (30) est pivoté de la position fonctionnelle (P1) dans la position de stationnement (P3) et que la force de support agissant sur l'entretoise de blocage (32) pousse le moyen de guidage (50) contre la butée (66).

2. Chargeur frontal (10) selon la revendication 1, **caractérisé en ce que** le montant de stationnement (30) est réalisé sous forme de profilé en U, l'au moins une rainure de guidage (48, 49) étant réalisée par au moins une tôle profilée (42) fixée à une paroi latérale (38, 40) du profilé en U.

3. Chargeur frontal (10) selon l'une quelconque des revendications précédentes, **caractérisé en ce qu'**un verrou précontraint par ressort (74) est réalisé sur le montant de stationnement (30), lequel peut être amené en prise avec un dispositif d'encliquetage (78) réalisé sur le balancier de chargeur frontal (12) pour le verrouillage du dispositif de support de stationnement (28) dans la position fonctionnelle (P1).
